# EUROPÄISCHE PATENTSCHRIFT

(11) **EP 0 663 714 B1**
(45) Veröffentlichungstag und Bekanntmachung des Hinweises auf die Patenterteilung: **23.10.1996**
(21) Anmeldenummer: 94118742.9
(22) Anmeldetag: 29.11.1994
(51) Int. Cl.: H02K 1/27

(54) **Magnetbefestigung in Magnetkupplungen**
Magnet securing in magnetic couplings
Fixation d'aimant par accouplement magnétique

(30) Priorität: 18.01.1994 DE 4401241
(43) Veröffentlichungstag der Anmeldung: 19.07.1995
(73) Patentinhaber: ITT Richter Chemie-Technik GmbH, D-47906 Kempen (DE)
(72) Erfinder: Milnikel, Siegfried, D-47839 Krefeld (DE)
(74) Vertreter: COHAUSZ HASE DAWIDOWICZ & PARTNER

(56) Entgegenhaltungen:
- DE-A- 3 636 405
- US-A- 4 115 716
- US-A- 4 877 986
- US-A- 5 111 094

## Beschreibung

Die Erfindung beschreibt eine Halterung für Magnete einer Magnetkupplung für Pumpenantriebe mit einem äußeren, an seiner Innenseite Magnete aufnehmenden Rotor und einem inneren, an seiner Außenseite Magnete aufnehmenden Rotor, wobei die Magnete gleichmäßig um den Umfang der Rotoren angeordnet sind.

Magnetkupplungen werden heute vorwiegend in Pumpenantrieben verwendet, bei denen ein Spalttopf einen äußeren und einen inneren Rotor voneinander trennt. Dabei treibt der äußere von einem Motor angetriebene und mit Magneten besetzte Rotor mit dem von den Magneten erzeugten Magnetfeld den inneren, ebenfalls mit Magneten besetzten Rotor an.

Die Magnete beider Rotoren werden üblicherweise durch Kleben bzw. durch formschlüssige Verbindung an den Rotoren in Position gehalten. Eine Befestigung der Magnete ist erforderlich, um bei dem inneren Rotor das fliehkraftbedingte Ablösen der Magnete vom Rotor zu verhindern und beim äußeren Rotor ein Verrutschen oder Verschieben der Magnete zu verhindern.

Die Literatur beschreibt vielfältige Methoden, um Magnete an Rotoren sicher zu verankern. So beschreibt die deutsche Patentschrift 6.641.165 einen Magnetkäfig für Kleinlichtmaschinen, bei dem die Magnetstäbe 1 parallel zur Ankerachse in gleichmäßigen Abständen um diese herum angeordnet sind, wobei die Magnetstäbe 1 jeweis auf ihrem Rücken einen flachen oder auch abgerundeten Wulst besitzen, der an jedem Ende durch eine bis auf den Magnetrücken reichende eingeschliffene Rinne 16 unterbrochen ist. Die so am Magnetstabende gebildete Nase bzw. Wulst 1c greift in eine Aussparung 3a der Kappe 3, wodurch die Magnetstäbe 1 in radialer und axialer Richtung festgehalten werden. Diese Lösung hat den Nachteil, daß ein relativ großer technischer Aufwand nötig ist, da die Magnetstäbe speziell geformt bzw. geschliffen sein und Toleranzen eingehalten werden müssen.

Aus der englischen Patentschrift 2.052.319 ist ebenfalls eine Befestigung von Magneten auf einem Rotor beschrieben. Dazu werden in den Rotor Aussparungen 12 eingearbeitet, in die die rechteckförmigen Magnete 11 eingelegt werden. Um den Rotor und den in diesen eingelegten Magneten 11 wird daraufhin ein Teil 14 aufgelegt und umgebogen, welches mit seinen Enden 14b die Innenseite des Rotors 10 umfaßt und somit ein Verlieren der Magnete 11 in radialer Richtung verhindert. Diese Lösung hat zum einen den Nachteil, daß der radiale Abstand von der Oberfläche des Magneten 12 zur Oberfläche des den Rotor umfassenden Teils 14 relativ groß ist und somit die Magnetwirkung nach außen hin verringert wird. Zusätzlich sind Füllteile 13, 15 notwendig, wobei eine hohe Paßgenauigkeit erforderlich ist, da die Füllteile 13,15 und die Magnete entweder nicht montierbar wären oder im Rotor hin und her schlagen würden und somit einem schnelleren Verschleiß unterliegen. Auch ist ein Ummanteln der Magnete mit Kunststoff nicht möglich, da keine Öffnungen oder Kanäle zum Einspritzen des flüssigen Kunststoffes vorhanden sind.

Aus der französischen Schrift 1.162.656 ist ebenfalls ein System zur radialen Sicherung der Magnete eines Rotors bekannt. Auch hier umfaßt ein Ring 10 den Rotor. Um ein Durchbrechen der Magnete aufgrund der angreifenden Fliehkräfte zu verhindern, wird in der französischen Schrift vorgeschlagen, die Wandstärke des umlaufenden Rings 10 im Bereich der Magnete 11 so zu verstärken, daß diese in radialer Richtung mit ihrer Fläche fest an der Innenseite des Rings 10 anliegen. Einen entsprechenden Ring 10 herzustellen, ist fertigungstechnisch sehr aufwendig und unverhältnismäßig teuer.

Eine weitere Möglichkeit besteht im Einkleben der Magnete in entsprechende Aussparungen der Rotoren. Ein solches Einkleben erfordert jedoch umfangreiche Vorbereitungen und Reinigungsarbeiten und ist zudem ein nicht automatisierbarer Fertigungsschritt. Zudem ist die Klebeverbindung je nach Fliehkraftbelastung beim inneren Magnetrotor nur bedingt haltbar und zusätzlich nur bedingt temperatur- und chemikalienbeständig ist. Daher sollten Magnete nur in Ausnahmefällen in Rotoren eingeklebt werden.

Da aus Schutzgründen (z.B. Korrosionsschutz) eine Kunststoffummantelung des inneren Magnetrotors einer Magnetkupplung bei Magnetkupplungspumpen gefordert ist, da dieser von dem zu fördernden Medium umgeben ist, muß die Klebverbindung auch den Kunststoffverarbeitungsprozeß und die mit diesem verbundenen hohen thermischen und mechanischen Belastungen überstehen, was besonders bei hochtemperaturbeständigen Kunststoffen meist zu einer thermischen Überbelastung des Klebers führt.

Auch sind formschlüssige Magnetverbindungen mit dem Rotor in der Regel sehr teuer, da die Magnete nur mit Sonderwerkzeugen hergestellt werden können oder ihre Form entsprechend geschliffen werden muß.

Aufgabe der Erfindung ist es daher, eine konstruktiv einfache Halterung für Magnete an einem inneren und an einem äußeren Rotor derart zu gestalten, daß die Magnete mit möglichst wenigen und einfach herzustellenden Teilen an den Rotoren unverrückbar, insbesondere während des Ummantelns der Rotoren mit Kunststoff gehalten werden.

Diese Aufgabe wird erfindungsgemäß dadurch gelöst, daß dünne Ringscheiben koaxial zu beiden Seiten der Magnete angeordnet sind, die mehrere Laschen haben, die die Magnete auf der dem Rotor abgewandten Seite teilweise übergreifen, wobei jeweils mindestens eine Lasche einen Magneten übergreift.

Der Vorteil der Erfindung liegt in der Verwendung von koaxialen Ringscheiben zur Halterung der Magnete auf dem inneren bzw. äußeren Rotor. Die koaxialen Ringscheiben halten die Magnete formschlüssig auf den für die Magnete an den Rotoren vorgesehenen Flächen ,so daß das Eindrücken von Kunststoff die Magnete nicht in ihrer Lage verändert. Die Ringe liegen ebenfalls verdrehsicher auf dem bzw. in dem Rotor. Hierdurch ist stets gewährleistet, daß die in Umfangrichtung am Rotor aufliegenden Magnete sicher gehalten werden. Eine entsprechende Halterung ist äußerst kompakt und leicht montierbar, wodurch sich eine hohe Funktionssicherheit ergibt.

Eine konstruktiv besonders einfache und leicht montierbare Halterung für Magnete sieht vor, daß die am äußeren bzw. inneren Rotor in radialer Umlaufrichtung angeordneten Magnete jeweils von mindestens einer Ringscheibe seitlich eingespannt sind und mindestens eine Nase der Ringscheiben auf der der Auflagefläche jedes Magneten abgewandten Seite aufliegt und die Nase den Magneten an dem Rotor hält.

Durch das seitliche Einspannen der Magnete durch die Ringscheibe sind diese in axialer Richtung fixiert. Die teilweise die Magneten umgreifenden Nasen halten dabei die Magnete gegen die Rotoren. Die durch die Drehung des inneren Rotors entstehenden Fliehkräfte werden von den Nasen der Ringscheiben aufgenommen.

Vorzugsweise wird vorgeschlagen, daß zwei oder mehrere Nasen jeweils einen Magneten umgreifen. Besonders vorteilhaft ist es, wenn jeweils zwei koaxiale Ringscheiben gegenüberliegend an dem Magneten anliegen.

Die Nasen sollten vorteilsmäßig insbesondere S-förmig geformt und federnd sein, so daß die Kontaktfläche der Nase den Magneten in Richtung der Auflagefläche des Magneten druckbeaufschlagt. Durch die Druckbeaufschlagung ist gewährleistet, daß auch während des Einspritzens des Kunststoffes die Magnete stets am Rotor anliegen und sich kein Kunststoff zwischen den Magneten und den Rotoren eindrücken kann.

Ebenfalls vorteilhaft ist es, wenn die Ringscheibe Vorsprünge hat, die die Magnete in Umfangrichtung in Position halten und die Ringscheibe am Außenumfang Aussparungen besitzt, die zwischen den Magneten angeordnet sind. Durch die am Außenumfang zwischen den Magneten angeordneten Aussparungen kann der Kunststoff zur Ummantelung des Rotors eingespritzt werden. Auch ist gewährleistet, daß der Kunststoff sich um die Magnete herum verteilen und die Hohlräume zwischen den Magneten ausfüllen kann. Bei entsprechend geformten und gestalteten Magneten umgreift die eingespritzte Kunststoffummantelung die Magnete derart, daß diese in axialer sowie radialer Richtung von der Kunststoffummantelung gehalten werden. Die achsiale Länge des Rotors wird durch die Verwendung der erfindungsgemäßen Ringscheiben ausschließlich durch die Dicke der Ringscheiben und den Abmessungen der Magnete bestimmt, wodurch der Rotor vorteilsmäßig schmäler wird und gleichzeitig eine Gewichtsreduzierung erreicht wird.

Besonders vorteilhaft ist es, wenn die koaxialen Ringscheiben aus einem nicht magnetisierbaren Werkstoff gefertigt sind. Dadurch wird verhindert, daß die Feldlinien der Magnete gestört werden, was zu einer besseren Magnetkopplung der Magnete des inneren und äußeren Rotors führt.

Vorteilsmäßig sind die Nasen der Ringscheibe für den inneren Rotor so in ihren Abmessungen gehalten, daß die Ecken der Magnete einen größeren radialen Abstand zur Rotorachse haben als die Ecken der Nase zur Rotorenachse. Somit wird der äußere Umfang des inneren Rotors von der Dimensionierung der Magnete bestimmt, wodurch die Übertragungsleistung der Magnetkupplung ebenfalls erhöht wird.

Um die Ringscheiben am inneren bzw. äußeren Rotor befestigen zu können, weisen die Ringscheiben vorteilsmäßig Öffnungen zur axialen Aufnahme von Schrauben oder nNieten auf, mit denen die Ringscheiben am inneren bzw. am äußeren Rotor in Position gehalten werden.

Bei eventuell auftretenden Montagefehlern, insbesondere vertauschte Polaritäten der eingesetzten Magnete oder Ummantelungsfehlern, sind die Magnete und die Ringscheiben durch Entfernen der Schrauben oder Nieten zerstörungsfrei demontierbar und nach der Behebung des Fehlers wiederverwendbar.

Bei der Verwendung von zwei oder mehreren in radialer Umfangrichtung parallel angeordneten Magnetreihen ist es vorteilhaft, jeweils zwei gegeneinanderliegende, mit ihren Nasen voneinander wegzeigende Ringscheiben zwischen den Magnetreihen anzuordnen. Dabei werden die beiden äußeren Magnetreihen jeweils von einer Endringscheibe umfaßt, wobei die Magnetreihen von den beiden Endringscheiben zusammengedrückt und in Position gehalten sind und die Endringscheiben am inneren bzw. äußeren Rotor mittels Schrauben oder Nieten befestigt sind. Hierdurch ist gewährleistet, daß während des Einspritzens des Kunststoffes für die Kunststoffummantelung des Rotors die Magnete sich nicht in axialer Richtung verschieben können. Dadurch, daß die Magnete symmetrisch in Umfangsrichtung des Rotors verteilt angeordnet sind, wird nur eine Art von Ringscheibe benötigt, um die Magnetreihen festzustellen.

Ausführungsbeispiele der Erfindung sind in den Zeichnungen dargestellt und werden im folgenden näher beschrieben.

Es zeigen:
- Fig: 1: Eine Draufsicht einer Ringscheibe, an der jeweils eine Nase für einen Magneten zur Halterung vorgesehen ist.
- Fig. 2: Querschnittsdarstellung einer Spalttopfpumpe mit einer Magnetkupplung zwischen Pumpenaggregat und nicht dargestelltem elektrischen Antrieb.
- Fig. 3 und Fig. 4.: Querschnittsdarstellung des inneren Rotors mit Magneten und Ringscheiben.
- Fig. 5a: Eine Seitenansicht einer S-förmig gebogenen Nase.
- Fig. 5b: Eine Seitenansicht einer flach umgebogenen Nase.
- Fig. 5c: Eine Draufsicht auf eine Nase.
- Fig. 6: Eine Draufsicht auf eine Ringscheibe zum Aufschieben auf einen inneren Rotor.
- Fig. 7 und Fig. 8: Querschnittsdarstellung durch einen äußeren Rotor mit Magneten und entsprechenden Ringscheiben.
- Fig. 9: Eine Querschnittsdarstellung durch einen Rotor mit zwei Magnetscheiben.
- Fig. 10 und Fig. 11: einen Rotor mit Kunststoffummantelung.

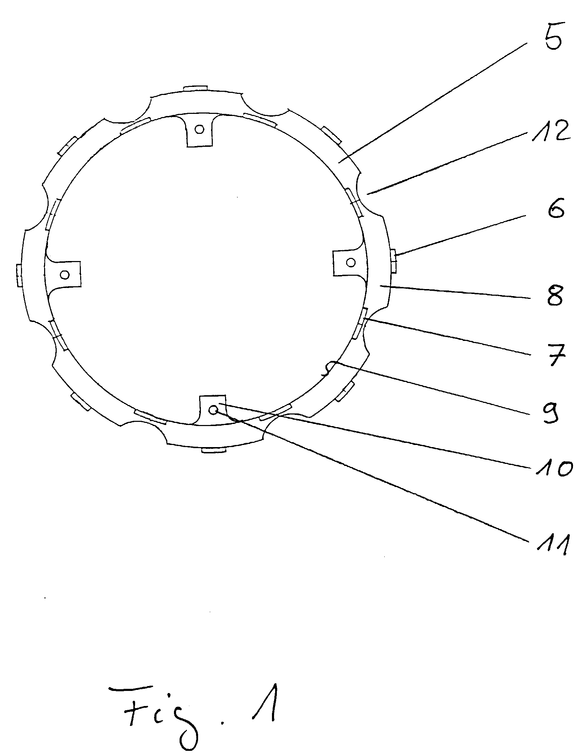

Figur 1 zeigt eine Ringscheibe 5 zur seitlichen Befestigung an einem inneren Rotor 2 einer Magnetkupplung. Am äußeren Rand sind symmetrisch Nasen 6 verteilt, die ungefähr parallel zur Flächennormalen der Ringscheibe abgewinkelt sind, um über die seitlich an die Ringscheibe anliegenden Magneten 4 greifen zu können. Zusätzlich weist die Ringscheibe Vorsprünge 7 auf, die ebenfalls parallel zur Flächennormalen der Ringscheibe 5 von der Ringscheibe 5 abstehen. Zwischen den Vorsprüngen 7 liegen die Magnete 4 ein und werden von den Vorsprüngen 7 in radialer Umfangrichtung gehalten. Zudem weist die Ringscheibe 5 an ihrem Außenumfang jeweils zwischen den Nasen 6 befindliche Aussparungen 12 beliebiger Form auf, durch die Kunststoff seitlich zwischen die Magnete 4 eingespritzt wird. Die Ringscheibe 5 besitzt angeformte Teile 10, die Bohrungen 11 aufweisen, durch die mittels Schrauben oder Mieten 23 die Ringscheibe 5 an dem inneren Rotor 2 befestigt wird.

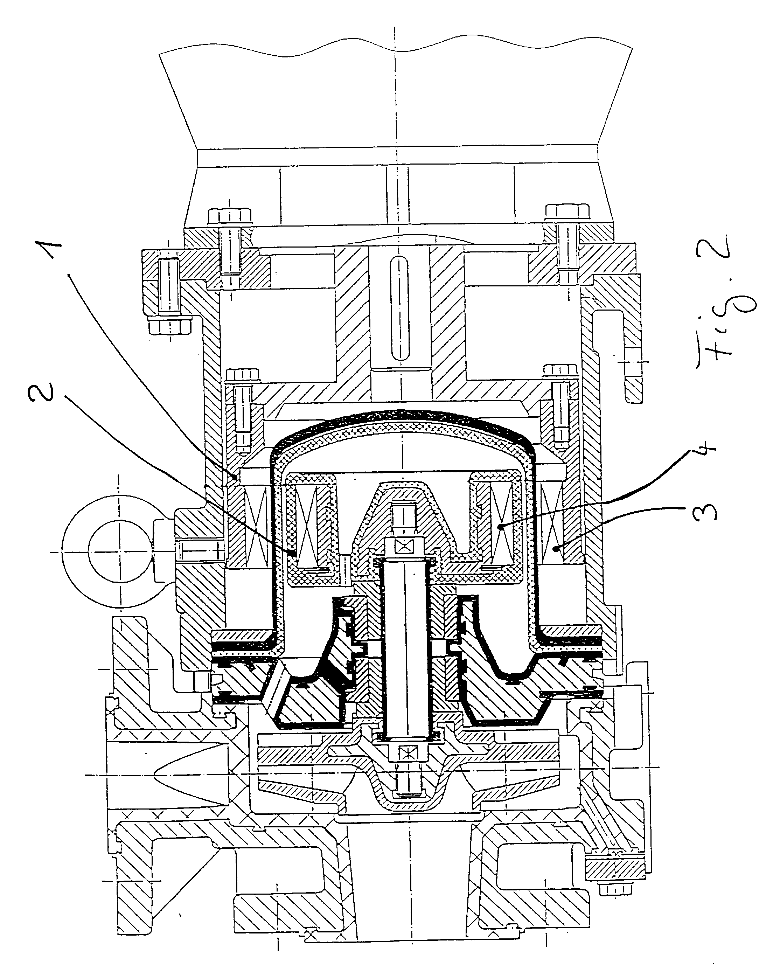

In Figur 2 ist der Querschnitt einer Spaltrohrpumpe mit Magnetkupplung dargestellt. Dabei sind die parallel in radialer Umfangrichtung zueinander angeordneten Magnetreihen als Magnetpakete 3 und 4 dargestellt. Die in der Erfindung beschriebenen Ringscheiben sind in Figur 2 nicht dargestellt.

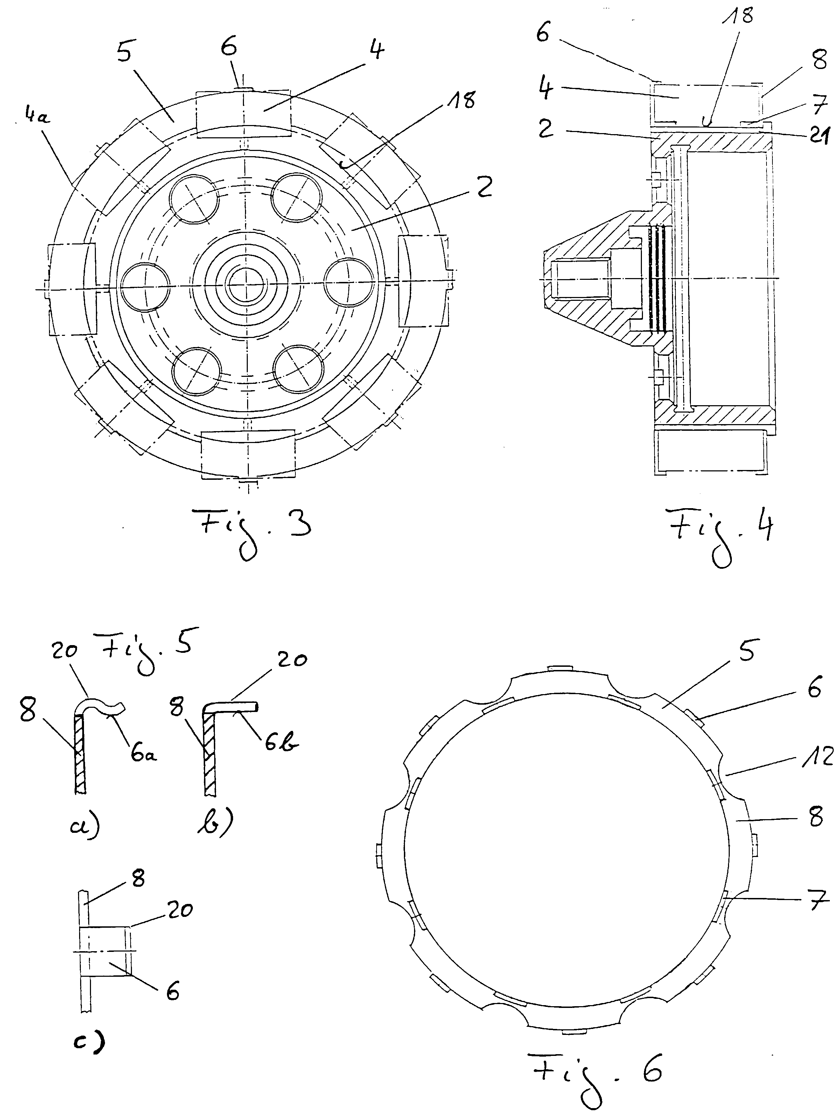

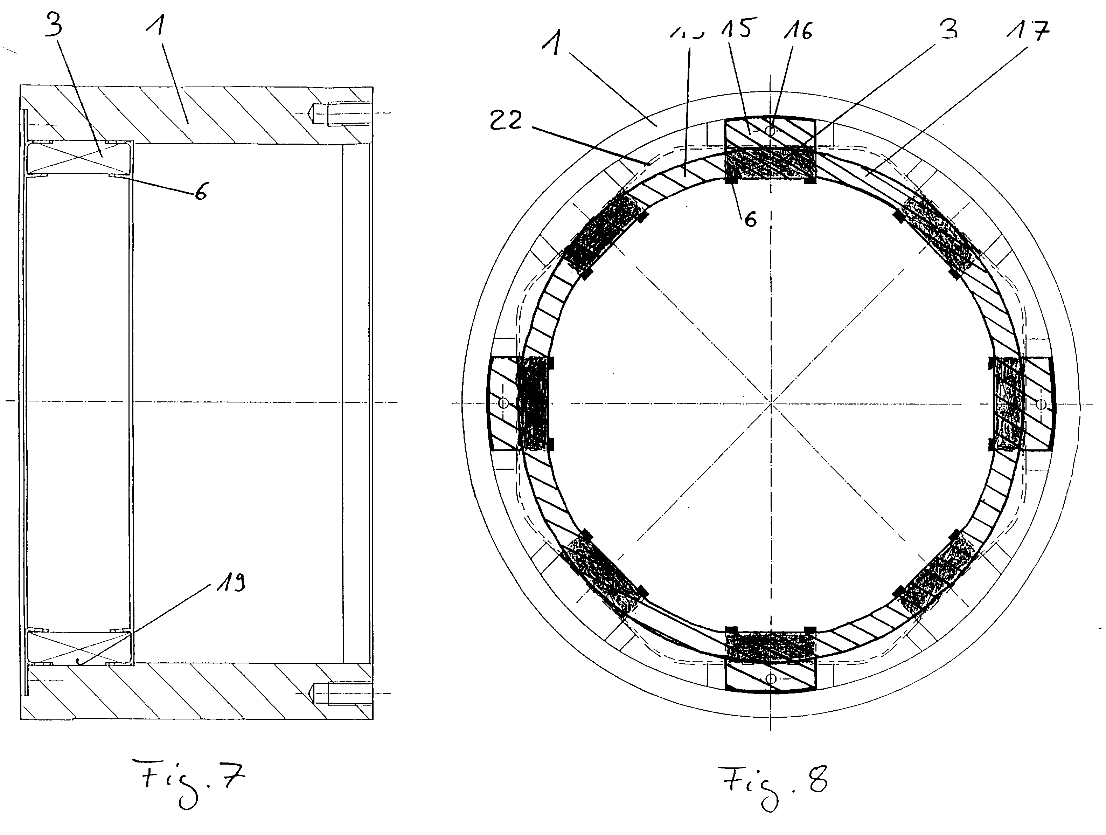

Die Figuren 3 und 4 zeigen einen inneren Rotor, an dessen äußerem Umfang symmetrisch Magnete 4 aufliegen, wobei die Magnete 4 in Ausnehmungen 18 einliegen und von den Nasen 6 der koaxial auf den inneren Rotor aufgeschobenen Ringscheiben 5 gegen die Kontaktfläche 18 gedrückt oder gehalten werden. Die Magnete 4 werden dabei in axialer Richtung von den Seitenflächen 8 der Ringscheiben 5 in Position gehalten und in radialer Umfangrichtung von den Vorsprüngen 7 der Ringscheibe 5. Durch das Umgreifen über die Magnete 4 der Nasen 6 der Ringscheiben 5 werden die Magnete 4 in radialer Richtung ebenfalls sicher gehalten. Um ein separates Montieren der Magnete 4 und Ringscheibe 5 von der Rotormontage zu ermöglichen, kann eine Ringhülse 21 verwendet werden, auf der die Magnete 4 und Ringscheiben 5 vormontiert werden, die anschließend über den Rotor geschoben wird. Die Ecken 4a der Magnete 4 haben einen größeren Abstand zur Achse des inneren Rotors 2, als die Nasen 6.

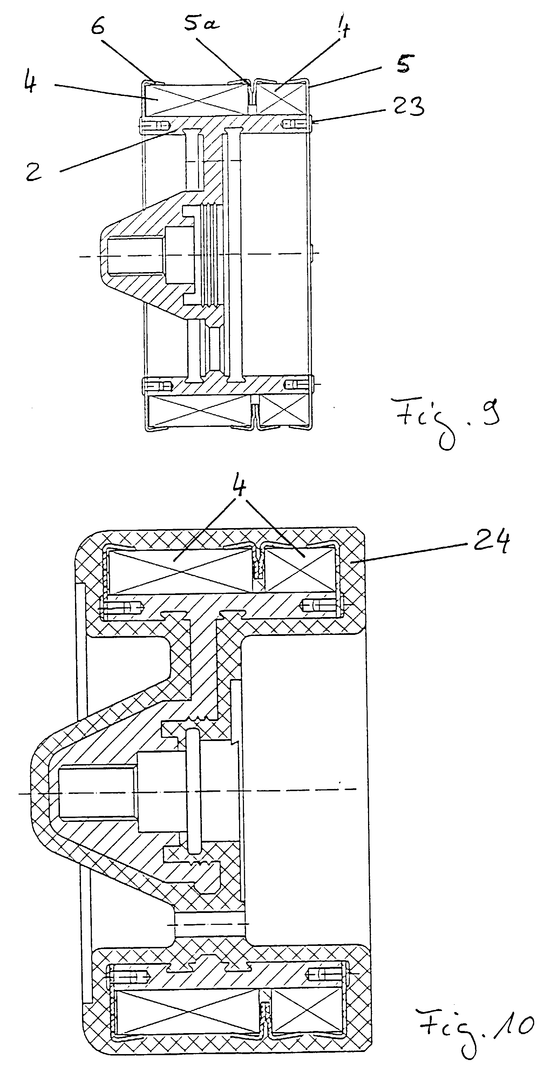

In Figur 5 sind mögliche Ausführungsformen von Nasen 6 dargestellt. Figur 5a zeigt eine S-förmig abgebogene Nase 6, die mit ihrer Kontaktfläche 6a die Magnete 3,4 druckbeaufschlagt. Dazu ist die Nase 6 so ausgeprägt, daß beim Aufschieben der Ringscheibe 5 die Nasen 6 von den Magneten 3,4 radial nach außen gedrückt werden, wodurch eine Federwirkung entsteht. In Figur 5b ist eine gerade Nase dargestellt, die ebenfalls die Magnete 4 übergreift, jedoch die Magnete nicht in Richtung der Auflagefläche 18 druckbeaufschlagt. Figur 5c zeigt eine mögliche Ausführungsform der Nase 6 in der Draufsicht.

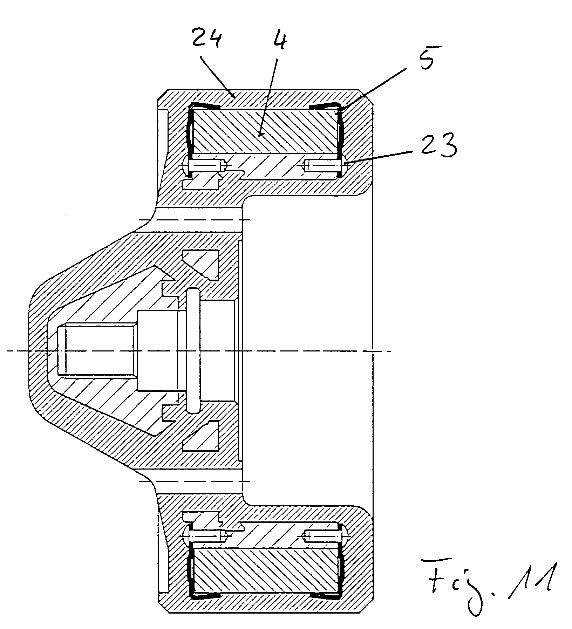

In Figur 6 ist eine Ringscheibe 5 dargestellt, die jedoch keine angeformten Teile 10 aufweist und nicht am inneren Rotor 2 mittels Schrauben oder Nieten befestigt, sndern nur auf den inneren Rotor 2 aufgeschoben wird.

Die Figuren 7 und 8 zeigen einen äußeren Rotor 1, an dessen Innenseite symmetrisch die Magnete 3 von entsprechenden Ringscheiben 13 und deren angeformten Nasen 6 gegen die Auflageflächen 19 gehalten bzw. gedrückt werden. Zwischen den Auflageflächen 19 und den Magneten 3 ist auch ein gebogener Blechstreifen oder Metallstreifen 22 einlegbar, der im Bereich der Auflageflächen 19 flach ist, so daß die Magnete 3 auf dem Streifen 22 beim Auflegen durch ihre magnetische Wirkung an dem Streifen 22 haften und bis zur Montage der Ringscheiben 13 in Position bleiben. Die Ringscheibe 13 für den äußeren Rotor 1 weist Laschen 15 auf, die über Öffnungen 16 verfügen, durch die mittels Schrauben oder Nieten die Ringscheibe 13 am äußeren Rotor 1 befestigt ist. In einer nicht dargestellten Ausführungsform weist die Ringscheibe 13 keine Laschen 15 auf, wodurch die Ringscheibe 13 beliebig in axialer Richtung im Inneren des äußeren Rotors 1 hin und her verschoben ist und somit mehrere Magnetreihen an der Innenseite des äußeren Rotors 1 befestigt sind. Die Magnete 3 werden dabei von der Seitenfläche 17 der Ringscheibe 13 in axialer Richtung in Position gehalten.

In Figur 9 ist ein innerer Rotor 2 dargestellt, auf dem zwei Magnetreihen 4 angeordnet sind. Zwischen den Magnetreihen 4 liegen Ringscheiben 5a, die mit ihren Nasen 6 voneinander wegzeigen und jeweils einer Magnetreihe 4 zugeordnet sind.

Die Magnete 4 sowie die Ringscheiben 5a sind durch die beiden äußeren Ringscheiben 5 in Position gehalten, wobei die Ringscheiben 5 mittels Schrauben oder Nieten 23 am Rotor 2 befestigt sind.

Die Figuren 10 und 11 zeigen Rotoren, die mit Kunststoff 24 ummantelt sind, wobei der in Figur 10 dargestellte Rotor über zwei Magnetreihen 4 verfügt.

## Patentansprüche

1. Halterung für Magnete einer Magnetkupplung für Pumpenantriebe, mit einem äußeren an seiner Innenseite Magnete (3) aufnehmenden Rotor (1) und einem inneren, an seiner Außenseite Magnete (4) aufnehmenden Rotor (2), wobei die Magnete gleichmäßig um den Umfang der Rotoren angeordnet sind, **dadurch gekennzeichnet,** daß dünne Ringscheiben (5,13) koaxial zu beiden Seiten der Magnete (3,4) angeordnet sind, die mehrere Laschen haben, die die Magnete (3,4) auf der dem Rotor abgewandten Seite teilweise übergreifen, wobei jeweils mindestens eine Lasche einen Magneten übergreift.

2. Halterung nach Anspruch 1, **dadurch gekennzeichnet,** daß die am äußeren bzw. inneren Rotor (1,2) in radialer Umlaufrichtung angeordneten Magnete (3,4) jeweils von mindestens einer Ringscheibe (5,13) seitlich eingespannt sind und mindestens eine Nase (6) der Ringscheibe (5,13) auf der der Auflagefläche (18,19) jedes Magneten (3,4) abgewandten Seite aufliegt und die Nase (6) den Magneten (3,4) an dem Rotor (1,2) hält.

3. Halterung nach Anspruch 1 oder 2, **dadurch gekennzeichnet,** daß zwei oder mehrere Nasen (6) jeweils einen Magneten (3,4) umgreifen.

4. Halterung nach einem der vorherigen Ansprüche, **dadurch gekennzeichnet,** daß jeweils zwei koaxiale Ringscheiben (5,13) gegenüberliegend an dem Magneten (3,4) anliegen.

5. Halterung nach einem der vorherigen Ansprüche, **dadurch gekennzeichnet,** daß die Nase (6) derart, insbesondere S-förmig geformt und federnd ist, daß die Kontaktfläche (6a,6b) der Nase (6) den Magneten (3,4) in Richtung der Auflagefläche (18,19) des Magneten (3,4) druckbeaufschlagt.

6. Halterung nach einem der vorherigen Ansprüche, **dadurch gekennzeichnet,** daß die Ringscheibe (5,13) Vorsprünge (7) hat, die die Magnete (3,4) in Umfangrichtung in Position halten.

7. Halterung nach einem der vorherigen Ansprüche, **dadurch gekennzeichnet,** daß die Ringscheibe (5) am Außenumfang Aussparungen (12) hat, die zwischen den Magneten liegen.

8. Halterung nach einem der vorherigen Ansprüche, **dadurch gekennzeichnet,** daß die Ringscheibe (5,13) aus einem nichtmagnetischen Werkstoff gefertigt ist.

9. Halterung nach einem der vorherigen Ansprüche, **dadurch gekennzeichnet,** daß die Nasen (6) der Ringscheibe (5) für den inneren Rotor (2) so in ihren Abmessungen gehalten sind, daß die Ecken (4a) der Magnete (4) einen größeren radialen Abstand zur Rotorachse haben, als die Ecken (20) der Nasen (6).

10. Halterung nach einem der voherigen Ansprüche, **dadurch gekennzeichnet,** daß die Ringscheibe (5,13) zur Befestigung am inneren bzw. äußeren Rotor (1,2) Öffnungen (11,16) zur axialen Aufnahme von Schrauben oder Nieten hat.

11. Halterung nach einem der vorherigen Ansprüche, **dadurch gekennzeichnet,** daß bei Verwendung von zwei oder mehreren in radialer Umfangrichtung parallel angeordneten Magnetreihen jeweils zwei gegeneinanderliegende, mit ihren Nasen (6) voneinander weg zeigenden Ringscheiben zwischen den Magnetreihen angeordnet sind.

12. Halterung nach Anspruch 11, **dadurch gekennzeichnet,** daß die beiden äußeren Magnetreihen jeweils von einer End-Ringscheibe umfaßt sind, wobei die Magnetreihen von den beiden End-Ringscheiben zusammengedrückt und in Position gehalten sind und die End-Ringscheiben am inneren bzw. äußeren Rotor (1,2) mittels Schrauben oder Nieten befestigt sind.

13. Halterung nach einem der vorigen Ansprüche, **dadurch gekennzeichnet,** daß der Rotor mit Kunststoff umspritzt wird.

## Claims

1. A securing means for magnets of a magnetic coupling for pump drives, having an outer rotor (1), receiving magnets (3) on its inner side, and an inner rotor (2), receiving magnets (4) on its outer side, the magnets being disposed evenly around the periphery of the rotors, characterized in that thin annular discs (5, 13) are disposed coaxially on both sides of the magnets (3, 4) which have a number of tabs which partially engage over the magnets (3, 4) on the side remote from the rotor, at least one tab engaging over one magnet in each case.

2. A securing means according to claim 1, characterized in that each of the magnets (3, 4) disposed in the radial peripheral direction on the outer/inner rotor (1, 2) respectively is laterally clamped by at least one annular disc (5, 13), and at least one lug (6) of the annular disc (5, 13) is borne on the side remote from the bearing face (18, 19) of each magnet (3, 4), the lug (6) securing the magnet (3, 4) on the rotor (1, 2).

3. A securing means according to claims 1 or 2, characterized in that two or more lugs (6) each engage around one magnet (3, 4).

4. A securing means according to one of the preceding claims, characterized in that in each case two coaxial annular discs (5, 13) bear opposite to one another against the magnet (3, 4).

5. A securing means according to one of the preceding claims, characterized in that the lug (6) is so shaped, more particularly S-shaped and resilient that the contact face (6a, 6b) of the lug (6) pressurizes the magnet (3, 4) in the direction of the bearing face (18, 19) of the magnet (3, 4).

6. A securing means according to one of the preceding claims, characterized in that the annular disc (5, 13) has projections (7) which retain the magnets (3, 4) in position in the peripheral direction.

7. A securing means according to one of the preceding claims, characterized in that the outer periphery of the annular disc (5) has cutaway portions (12) which are situated between the magnets.

8. A securing means according to one of the preceding claims, characterized in that the annular disc (5, 13) is made of a nonmagnetic material.

9. A securing means according to one of the preceding claims, characterized in that the dimensions of the lugs (6) of the annular disc (5) for the inner rotor (2) are such that the corners (4a) of the magnets (4) are at a larger radial distance from the rotor axis than the corners (20) of the lugs (6).

10. A securing means according to one of the preceding claims, characterized in that the annular disc (5, 13) for attachment to the inner/outer rotor (1, 2) respectively is formed with openings (11, 16) axially receiving screws or rivets.

11. A securing means according to one of the preceding claims, characterized in that if use is made of two or more rows of magnets disposed in parallel in the radial peripheral direction, in each case two opposite annular discs whose lugs (6) point away from one another are disposed between the rows of magnets.

12. A securing means according to claim 11, characterized in that each of the two outer rows of magnets is engaged around by an end annular disc, the rows of magnets being pressed together and retained in position by the two end annular discs, and the end annular discs being attached to the inner/outer rotor (1, 2) respectively by means of screws or rivets.

13. A securing means according to one of the preceding claims, characterized in that the annular disc is injection moulded around the rotor.

## Revendications

1. Fixation pour des aimants d'un accouplement magnétique pour des commandes de pompe, avec un rotor extérieur (1) recevant des aimants (3) sur son côté intérieur et un rotor intérieur (2) recevant des aimants (4) sur son côté extérieur, les aimants étant disposés uniformément sur la périphérie des rotors,
caractérisée en ce que des disques annulaires (5, 13) minces sont disposés coaxialement des deux côtés des aimants (3, 4) et ont plusieurs attaches qui enjambent partiellement les aimants (3,4) sur le côté écarté du rotor, au moins une attache enjambant respectivement un aimant.

2. Fixation selon la revendication 1,
caractérisée en ce que les aimants (3, 4) disposés en direction de circulation radiale sur le rotor (1, 2) extérieur ou respectivement intérieur sont encastrés latéralement respectivement par au moins un disque annulaire (5, 13) et au moins un tenon (6) du disque annulaire (5, 13) est en appui sur le côté écarté de la surface d'appui (18, 19) de chaque aimant (3, 4) et le tenon (6) maintient les aimants (3, 4) sur le rotor (1, 2).

3. Fixation selon la revendication 1 ou 2,
caractérisée en ce que deux tenons (6) ou plus enveloppent respectivement un aimant (3,4).

4. Fixation selon l'une des revendications précédentes, caractérisée en ce que deux disques annulaires (5, 13) coaxiaux sont respectivement en appui face à face sur les aimants (3, 4).

5. Fixation selon l'une des revendications précédentes,
caractérisée en ce que le tenon (6) est conformé en particulier en forme de S et élastique de telle sorte que la surface de contact (6a, 6b) du tenon (6) applique une pression à l'aimant (3,4) en direction de la surface d'appui (18, 19) de l'aimant (3, 4).

6. Fixation selon l'une des revendications précédentes, caractérisée en ce que le disque annulaire (5, 13) a des saillies (7) qui maintiennent les aimants (3, 4) en position en direction circonférencielle.

7. Fixation selon l'une des revendications précédentes, caractérisée en ce que le disque annulaire (5) a, sur la périphérie extérieure, des évidements (12) qui se trouvent entre les aimants.

8. Fixation selon l'une des revendications précédentes, caractérisée en ce que le disque annulaire (5,13) est fabriqué en un matériau non magnétique.

9. Fixation selon l'une des revendications précédentes, caractérisée en ce que les tenons (6) du disque annulaire (5) pour le rotor intérieur (2) ont des dimensions maintenues telles que les arêtes (4a) des aimants (3,4) ont un écartement radial par rapport à l'axe du rotor plus grand que les arêtes (20) des tenons (6).

10. Fixation selon l'une des revendications précédentes, caractérisée en ce que le disque annulaire (5, 13) a, pour la fixation au rotor (1, 2) intérieur ou respectivement extérieur, des ouvertures (11, 16) pour la réception axiale de vis ou de rivets.

11. Fixation selon l'une des revendications précédentes, caractérisée en ce que, dans le cas de l'utilisation de deux rangées d'aimant ou plus, disposées parallèles en direction périphérique radiale, deux disques annulaires, disposés l'un contre l'autre, avec leurs tenons (6) dirigés à l'opposé l'un de l'autre, sont disposés respectivement entre les rangées d'aimants.

12. Fixation selon la revendication 11,
caractérisée en ce que les deux rangées d'aimants extérieures sont respectivement entourées par un disque annulaire terminal, les rangées d'aimants étant comprimées ensemble par les deux disques annulaires terminaux et sont maintenues en position et les disques annulaires terminaux sont maintenus sur le rotor (1, 2) intérieur ou respectivement extérieur au moyen de vis ou de rivets.

13. Fixation selon l'une des revendications précédentes caractérisée en ce que le rotor est recouvert par injection d'une matière synthétique.
